# FASCICULE DE BREVET EUROPEEN

(11) **EP 0 824 060 B1**
(45) Date de publication et mention de la délivrance du brevet: **24.04.2002**
(21) Numéro de dépôt: 97113418.4
(22) Date de dépôt: 04.08.1997
(51) Int. Cl.: B29C 47/32, B29C 47/96, B29B 17/00

(54) **Tête d'extrusion pour mélange de caoutchouc comprenant un dispositif de recyclage des ebarbures, et dispositif de recyclage destine à être monte sur une tête d'extrusion**
Extrusionskopf für Kautschukmischung mit einer Wiederverwertungsvorrichtung zum Wiederverwerten von Werkstückkanten und eine Wiederverwertungsvorrichtung für Montage an Extruderkopf
Extrusion head for rubber mix including a device for recycling the edge trimmings and recycling device for mounting on extruder head

(30) Priorité: 09.08.1996 FR 9610186
(43) Date de publication de la demande: 18.02.1998
(73) Titulaire: COMPAGNIE GENERALE DES ETABLISSEMENTS MICHELIN-MICHELIN & CIE, 63040 Clermont-Ferrand Cédex (FR)
(72) Inventeur: Crosnier, Gérard, 63122 Ceyrat (FR)
(74) Mandataire: Dequire, Philippe Jean-Marie Denis

(56) Documents cités:
- US-A- 3 871 810
- US-A- 4 353 967
- US-A- 4 927 482
- US-A- 5 030 079
- PATENT ABSTRACTS OF JAPAN vol. 008, no. 096 (M-294), 4 mai 1984 & JP 59 011221 A (MATSUSHITA DENKO KK), 20 janvier 1984,

## Description

La présente invention concerne une extrudeuse de produits profilés constitués à base d'un mélange de caoutchouc.

Différentes catégories d'appareils sont déjà connues pour réaliser l'extrusion de caoutchouc. Citons en particulier la catégorie comprenant des extrudeuses appelées couramment "extrudeuses nez à rouleau" qui permettent d'extruder, en grande longueur, un produit dont le profil est constant. Ce profil, c'est-à-dire la section du produit en caoutchouc extrudé, est défini dans ce type d'appareil d'une part par un rouleau sur lequel le caoutchouc est extrudé, et d'autre part par une paroi qui coopère avec ce rouleau pour délimiter un orifice d'extrusion.

Dans le domaine de la fabrication des enveloppes de pneumatiques, on réalise des produits semi-finis profilés constitués par des mélanges de caoutchouc. Or, on cherche à faire des enveloppes de pneumatiques de façon sans cesse plus précise. Cette précision de fabrication dépend notamment du respect des dimensions de produits en caoutchouc dont l'assemblage constitue l'enveloppe de pneumatique. L'extrudeuse nez à rouleau "classique", c'est-à-dire telle que décrite précédemment, n'apporte pas, à elle seule, une telle précision.

La publication US-3 871 810 décrit une extrudeuse nez à rouleau qui comporte en amont de l'orifice d'extrusion une chambre de canalisation du flux de caoutchouc. Cette chambre est constituée par un outillage comportant une série de profils successifs afin d'ajuster précisément le profil du mélange de caoutchouc au profil défini par l'orifice d'extrusion. Le profil du produit extrudé obtenu est alors d'une grande précision. Cependant cet agencement utilisant un matériel complexe devant être parfaitement dimensionné, est d'une part fort coûteux, et d'autre part nécessite un réglage très précis. De plus, le passage à l'extrusion d'un autre produit de dimension différente devient une opération longue et coûteuse, puisqu'il ne suffit plus alors de changer uniquement l'élément de paroi fixe, mais également l'outillage complexe constituant la chambre de canalisation.

La présente invention vise à pallier l'ensemble des inconvénients précités en réalisant un produit extrudé au profil constant et précis.

Dans la suite, les désignations "aval" et "amont" seront utilisées en référence au sens de rotation du rouleau de l'extrudeuse.

L'invention concerne une extrudeuse pour fabriquer un produit à base d'un mélange de caoutchouc comportant une tête d'extrusion pourvue d'un passage d'entrée dudit mélange de caoutchouc dans une chambre d'accumulation débouchant sur un orifice d'extrusion au travers duquel le mélange de caoutchouc est refoulé et qui comporte une paroi coopérant avec un rouleau rotatif pour définir le profil du produit, des couteaux d'ébarbage des bords du produit extrudé étant situés immédiatement en aval de l'orifice d'extrusion, la tête d'extrusion comprenant un dispositif permettant le recyclage des ébarbures obtenues par leur réintroduction dans la chambre d'accumulation.

Cette nouvelle solution mettant en place un outillage simple, au réglage aisé, permet, en retaillant les bords du produit profilé extrudé, d'obtenir un profil du produit extrudé très précis. Les ébarbures réalisées ne nuisent, par ailleurs, pas à l'intérêt de cet agencement puisqu'elles ne constituent pas une perte de produit grâce à leur recyclage.

De plus, un changement dimensionnel ne nécessite, en plus du changement de l'élément de paroi, qu'un réglage de l'écartement des couteaux d'ébarbage.

Par ailleurs, cette solution est également avantageuse, car les bords retaillés du produit extrudé sont toujours beaucoup plus nets que les bords de produits obtenus directement en sortie d'un orifice d'extrusion.

Afin de réaliser un recyclage efficace et économique des ébarbures, ces dernières sont réintroduites directement entre le passage d'entrée et l'orifice d'extrusion grâce au dispositif.

L'invention concerne également une tête d'extrusion pour fabriquer un produit à base d'un mélange de caoutchouc, pourvue d'un passage d'entrée dudit mélange de caoutchouc dans une chambre d'accumulation débouchant sur un orifice d'extrusion au travers duquel ledit mélange de caoutchouc est refoulé et qui comporte une paroi coopérant avec un rouleau rotatif pour définir le profil du produit, la tête d'extrusion comprenant des couteaux d'ébarbage des bords du produit extrudé, situés immédiatement en aval de l'orifice d'extrusion, et un dispositif permettant de recycler les ébarbures obtenues par leur réintroduction dans la chambre d'accumulation directement entre le passage d'entrée et l'orifice d'extrusion.

La demanderesse vient de découvrir de manière surprenante que ce dispositif pouvait également être utilisé afin de réaliser un doublage par superposition dans la chambre d'accumulation entre le passage d'entrée et l'orifice d'extrusion du produit extrudé par un autre produit apporté de l'extérieur grâce au dispositif sous la forme d'une "semelle".

Ainsi l'invention concerne également un dispositif destiné à être monté sur une tête d'extrusion comportant un rouleau rotatif, le dispositif comprenant, successivement, un élément collecteur d'un matériau, qui possède une surface extérieure concave portant des nervures convergentes, un élément d'agglomération dudit matériau en une masse cohérente, ledit élément d'agglomération ayant une surface extérieure concave de courbure plus marquée que celle de la surface extérieure de l'élément collecteur, et un élément de laminage et de répartition de cette masse constitué par une lame.

L'invention a encore pour objet une tête d'extrusion pour fabriquer un produit à base d'un mélange de caoutchouc, pourvue d'un passage d'entrée dans une chambre d'accumulation débouchant sur un orifice d'extrusion au travers duquel ledit mélange de caoutchouc est refoulé et qui comporte une paroi coopérant avec un rouleau rotatif pour définir le profil du produit, la tête d'extrusion comprenant un dispositif permettant d'introduire un matériau à base d'un mélange de caoutchouc dans la chambre d'accumulation directement entre le passage d'entrée et l'orifice d'extrusion et de le répartir à la surface du rouleau pour superposer par dessus le produit en provenance du passage d'entrée.

D'autres caractéristiques et avantages de l'invention apparaîtront à la lecture d'un exemple de réalisation d'une tête d'extrusion conforme à l'invention, en référence aux dessins dans lesquels :
- la figure 1 est une coupe partielle de la tête d'extrusion selon la ligne I de la figure 2,
- la figure 2 est une coupe de la tête d'extrusion représentée à la figure 1, selon la ligne II de ladite figure 1,
- la figure 3 est une perspective schématique d'un élément constitutif de la tête d'extrusion,
- la figure 4 est un grossissement du détail Z représenté sur la figure 2.

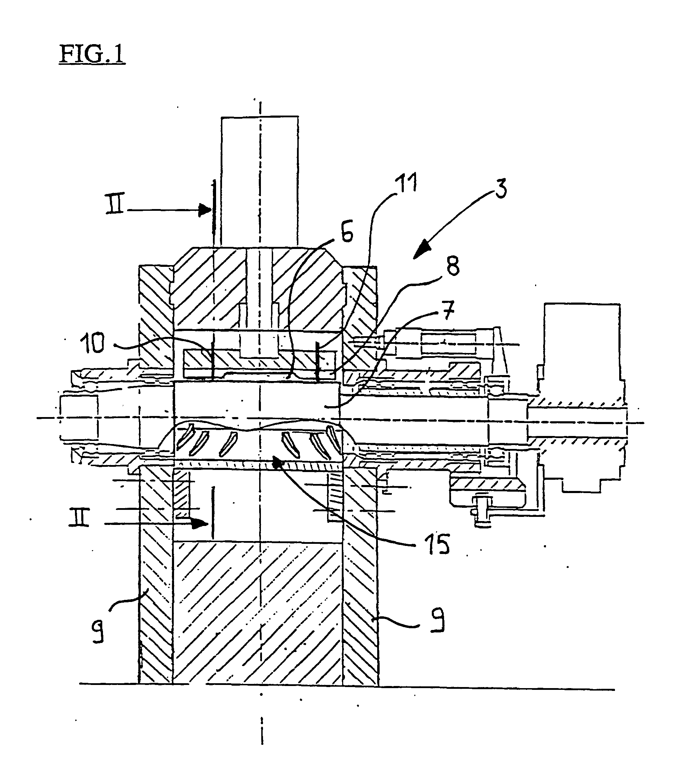

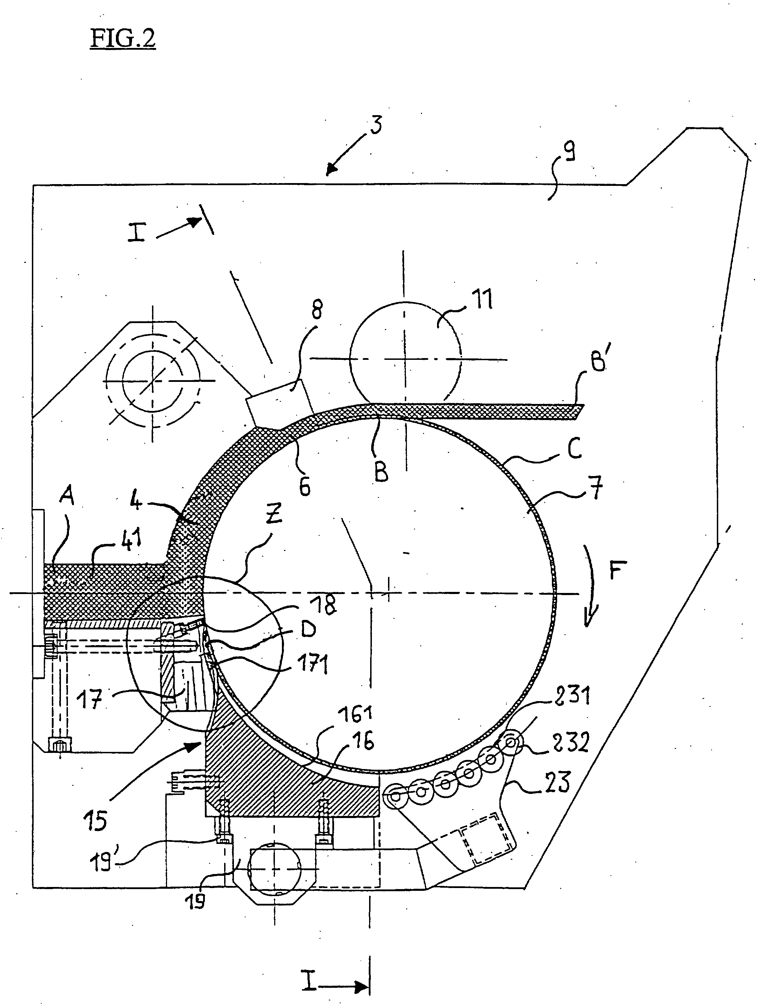

Selon la figure 1, une extrudeuse du type nez à rouleau, conforme à l'invention, possède une tête d'extrusion 3. On pourra , à titre d'exemple, choisir une extrudeuse à vis, ladite vis n'étant pas représentée ici. Cette vis permet de refouler un mélange de caoutchouc A au travers d'un passage d'entrée 41 dans une chambre d'accumulation 4 portée par la tête d'extrusion 3, représentée sur la figure 2, puis vers un orifice d'extrusion 6 sur lequel débouche ladite chambre d'accumulation.

La tête d'extrusion 3 comporte un rouleau rotatif 7 qui coopère avec une paroi fixe 8 de l'orifice d'extrusion 6, afin de définir le profil du produit à extruder. Le profil souhaité est obtenu, comme il est connu pour les extrudeuses nez à rouleau, en choisissant de façon adéquate la forme de la paroi fixe 8, associée au rouleau 7 dont la surface est parfaitement cylindrique. Ainsi lors d'un changement de dimension à effectuer, il suffit de changer la paroi fixe 8 afin qu'elle soit adaptée au nouveau profil désiré. Le rouleau 7 et la paroi 8 définissent ainsi l'orifice d'extrusion 6 au travers duquel le mélange A est refoulé.

Le rouleau 7 ainsi que la paroi 8 sont montés entre deux flasques 9 portés par la tête d'extrusion 3, reliés entre eux par des entretoises non représentées.

Selon une variante de réalisation de l'invention, on peut également choisir une paroi non pas fixe mais rotative, constituée par un second rouleau et coopérant avec le rouleau 7, comme on peut en voir un exemple de réalisation dans la demande de brevet FR-A-2 700 291 déposée par la demanderesse.

Dans la présente description, on appelle "profil" d'un produit, l'allure de la section de ce produit prise dans un plan perpendiculaire à sa grande longueur. Lorsque l'on parle de profil d'un outillage, il s'agit de la forme de l'orifice au travers duquel on extrude le caoutchouc.

Afin d'améliorer la précision du profil du produit extrudé B et également la netteté des bords dudit produit, des couteaux d'ébarbage 10 et 11 sont montés immédiatement en aval, par rapport au sens de rotation du rouleau 7 indiqué par la flèche F sur la figure 2, de l'orifice d'extrusion 6.

Ces couteaux 10 et 11 dont l'écartement délimitent la largeur exacte du profil, retaillent les bords du produit extrudé B. Ainsi cette coupe est effectuée directement sur le rouleau 7 immédiatement en sortie de l'orifice d'extrusion 6, permettant d'obtenir le produit B'.

Conformément à l'invention, la tête d'extrusion 3 comporte un dispositif 15 permettant le recyclage des ébarbures C réalisées lors de cet ébarbage, en les réintroduisant dans la chambre d'accumulation 4.

Selon une première variante de réalisation de l'invention, non représentée, la réintroduction des ébarbures C est effectuée en entrée de l'extrudeuse simultanément à l'introduction dans ladite extrudeuse du mélange de caoutchouc, c'est-à-dire que les ébarbures C traversent le passage d'entrée 41 afin de pénétrer dans la chambre d'accumulation 4 et atteindre ensuite l'orifice d'extrusion 6.

Cependant cette solution présente quelques inconvénients. En effet, elle occasionne une diminution du débit et de la productivité de l'extrudeuse, proportionnelle à la quantité recyclée.

De plus, afin de réaliser un recyclage continu, les bandes d'ébarbures doivent circuler facilement jusqu'à l'entrée de l'extrudeuse, ce qui suppose afin de ne pas se rompre pendant ce trajet que ces dernières possèdent une épaisseur suffisante, même si celle-ci n'est pas justifiée par les contraintes liées au produit ou aux couteaux.

Par ailleurs, la température est un facteur important à contrôler pour l'extrusion du caoutchouc afin d'éviter une vulcanisation prématurée. Or la réintroduction d'ébarbures dont la température est supérieure à celle du mélange de caoutchouc élève la température générale du mélange introduit dans l'extrudeuse.

Une seconde variante préférentielle de réalisation de l'invention résout ces problèmes. Il est apparu qu'il était possible de recycler les ébarbures en les réintroduisant dans la chambre d'accumulation 4 directement entre le passage d'entrée 41 et l'orifice d'extrusion 6, ceci en respectant l'uniformité du produit extrudé obtenu et sans nuire à la simplicité de la tête d'extrusion.

Ce dispositif 15 est localisé en aval des couteaux d'ébarbages 10 et 11. Il coopère avec le rouleau 7 afin d'entraîner les ébarbures C jusqu'à l'orifice d'extrusion 6, le long dudit rouleau 7, dans le sens de rotation de ce dernier. Ainsi les ébarbures C sont réintroduites sur le rouleau 7 en amont de la chambre d'accumulation 4.

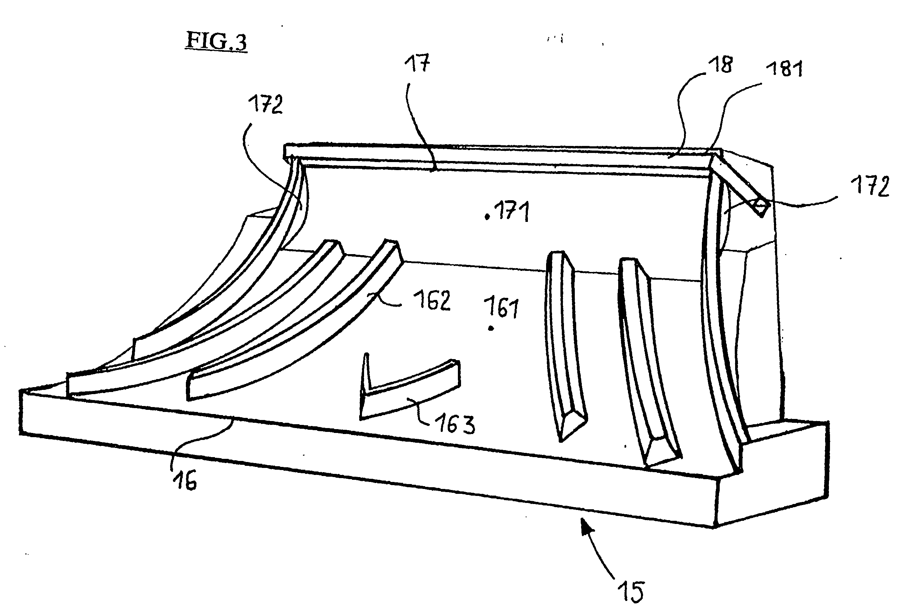

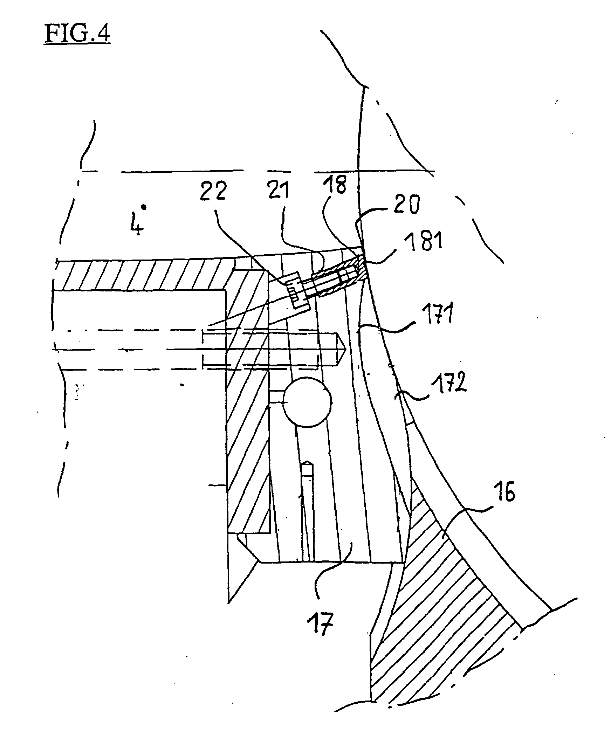

Comme le montrent les figures 2 et 3 très schématiquement, ce dispositif 15 comprend trois parties coopérant successivement, en s'éloignant des couteaux d'ébarbage 10 et 11, avec le rouleau 7 :
- la première partie est constituée par un élément 16 collecteur des ébarbures C assurant leur recentrage sur le rouleau 7. Cet élément 16 possède une surface extérieure 161 concave de courbure donnée coopérant avec le rouleau 7, qui porte des nervures 162 convergeant vers le centre dudit rouleau 7 afin de ramener les ébarbures C vers ce dernier.
   La surface extérieure 161 est sensiblement parallèle à la surface du rouleau 7 avec laquelle elle coopère, et faiblement espacée de cette dernière afin d'obtenir le plus d'efficacité possible. Dans l'exemple représenté à la figure 2, cette surface extérieure 161 converge légèrement vers le rouleau 7 en direction de la deuxième partie du dispositif 15.
- Cette deuxième partie est constituée par un élément 17 d'agglomération des ébarbures C en une masse cohérente par la formation d'un bourrelet D. Cet élément 17 possède une surface extérieure 171 concave de courbure plus marquée que celle de la surface 161 de l'élément collecteur 16, permettant la formation du bourrelet D entre ladite surface 171 et celle du rouleau 7.
   L'élément d'agglomération 17 possède également des bords latéraux opposés 172 limitant, transversalement par rapport au rouleau 7, l'étendue de la masse cohérente formée.
- Enfin la troisième partie est constituée par un élément 18 de laminage et de répartition du bourrelet D sur le rouleau 7, constitué par une lame, délimitant avec le rouleau 7, un orifice de passage 20 débouchant dans la chambre d'accumulation 4 entre le passage d'entrée 41 et l'orifice d'extrusion 6. Le bord libre 181 de la lame 18 réalise ainsi le laminage du bourrelet D et sa répartition transversalement sur la surface du rouleau 7.
   La lame 18 est insérée dans une ouverture 21 pratiquée dans l'élément d'agglomération 17 et fixée dans celle-ci grâce à un organe de réglage 22 également localisé dans ladite ouverture 21, tel qu'une vis, qui assure également le positionnement de la lame 18 par rapport au rouleau 7 en maintenant un écartement sensiblement constant entre ledit rouleau 7 et la lame 18, comme on le voit sur la figure 4.
   Dans cet exemple de réalisation, la lame 18 possède un bord 181 rectiligne cependant on peut envisager sans difficulté qu'il ait un autre type de profil.

Le dispositif 15 est solidarisé à la tête d'extrusion 3 grâce à un support 19 monté par l'intermédiaire de vis 19' sur l'élément d'agglomération et fixé latéralement aux deux flasques 9 par des moyens non représentés.

On peut envisager de réaliser plusieurs produits extrudés simultanément, juxtaposés sur le rouleau 7, la tête d'extrusion 3 comporte alors autant de couteaux d'ébarbage que de bords de produit. Dans un tel cas, la surface extérieure 161 de l'élément collecteur 16 comporte une nervure centrale divergente 163 en forme de V, telle que représentée sur la figure 3, située dans la partie centrale de ladite surface afin de s'assurer que l'ensemble des ébarbures est effectivement collecté.

La présence des couteaux d'ébarbage 10, 11 et du dispositif 15 par leur caractéristiques, contribuent à l'obtention d'une tête d'extrusion simple. Ce dispositif 15 permet également de participer à l'objectif économique de l'invention. En effet, par ce système les ébarbures C ne constituent pas une perte pure en produit et, de plus, cette réintroduction directe dans la chambre d'accumulation 4 à proximité de l'orifice d'extrusion 6 permet de ne pas modifier le débit de l'extrudeuse.

Cette disposition permet également le fonctionnement du recyclage même si les ébarbures sont très fines. Ainsi le dispositif 15 n'entraîne pas de contraintes particulières sur les ébarbures réalisées, la taille de celles-ci ne dépendant que du produit ou des couteaux.

Par ailleurs, il est intéressant de prévoir, comme représenté sur la figure 2, en amont du dispositif 15, un dispositif de sécurité 23 pour éviter à l'utilisateur le danger de l'angle rentrant formé entre l'élément collecteur 16 et le rouleau 7. Ce dispositif 23, également fixé aux flasques 9, possède une surface extérieure 231 coopérant avec le rouleau 7 possédant un détecteur, non représenté, qui entraîne, par exemple, l'arrêt de l'extrusion si un opérateur passe sa main entre la surface 231 et le rouleau 7.
Cette surface 231 est avantageusement équipée de petites roulettes 232 d'axe de rotation parallèle à celui du rouleau 7, facilitant l'entraînement des ébarbures vers le dispositif 15.

Dans ce qui suit, on décrira succinctement le fonctionnement de la tête d'extrusion 3, en référence à la figure 2.

Un mélange de caoutchouc A est refoulé au travers du passage d'entrée 41 dans la chambre d'accumulation 4 jusqu'à l'orifice d'extrusion 6 dont la paroi fixe 8 permet, en coopération avec le rouleau 7 qui entraîne le mélange, de réaliser le profil du produit à extruder.

En sortie de l'orifice d'extrusion 6, le produit extrudé B est ébarbé grâce aux couteaux 10 et 11 qui retaillent les bords de ce dernier. Le produit B', ainsi obtenu, est décollé du rouleau 7 et entraîné sur un second rouleau non représenté. Bien entendu, d'autres moyens d'entraînement du produit B' peuvent être envisagés.

Les ébarbures C constituées lors de cet ébarbage restent sur le rouleau 7. En effet, il est connu que les mélanges de caoutchouc possèdent un pouvoir collant à cru non négligeable. Il n'est donc pas nécessaire de réaliser une opération supplémentaire pour que les ébarbures restent liées au rouleau 7, ces dernières suivant donc la rotation dudit rouleau 7.

Les ébarbures C sont ainsi guidées, en étant éventuellement aidées par les roulettes 232 du dispositif de sécurité 23, jusqu'à l'élément collecteur 16, et rentrent en contact avec les nervures 162 qui les ramènent vers le centre du rouleau 7, tout en continuant de suivre la rotation de ce dernier.

Puis les ébarbures C atteignent l'élément d'agglomération 17. Ce dernier ayant une surface extérieure 171 de courbure plus marquée que celle du collecteur et donc que celle du rouleau 7, les ébarbures C vont s'amasser entre la surface 171 et le rouleau 7. En effet, l'étroitesse de l'orifice de passage 20 qui suit, empêche les ébarbures C de continuer directement leur cheminement le long du rouleau 7. Ainsi les ébarbures C s'enroulent sur elles-mêmes en se mélangeant et constituent un bourrelet D.

Cependant l'orifice 20 n'interdit pas tout passage de mélange, mais celui-ci ne se fait qu'après le laminage du bourrelet D par la lame 18. Celle-ci repartit simultanément cette masse d'ébarbures sur le rouleau 7 sous la forme d'une surface très fine. Bien entendu la forte pression exercée par le bourrelet D sur la lame 18 nécessite une contre-pression réalisée par l'organe de maintien 22. Ceci permet de conserver un orifice 20 très étroit entre le rouleau 7 et la lame 18.

L'ensemble des ébarbures C est ainsi réintroduit dans la chambre d'accumulation 4 entre le passage d'entrée 41 et l'orifice d'extrusion 6 et répartit sous la forme d'une semelle très mince entraînée par le rouleau 7. Il se produit alors un doublage par superposition par dessus cette semelle, du mélange de caoutchouc en provenance du passage d'entrée 41. Le produit extrudé et retaillé B' possède donc en fait une semelle fine constitué par le produit recyclé. Le réglage de l'orifice 20 entre la lame 18 et le rouleau 7 est donc fixé en fonction de la quantité de produit recyclé acceptée pour être réintroduite dans le produit extrudé.

La demanderesse a découvert de façon surprenante que ce dispositif 15 qui réalise ainsi un doublage par superposition des ébarbures au produit extrudé, pouvait également être avantageusement utilisé afin de réaliser un doublage par superposition du produit extrudé par un autre matériau à base d'un mélange de caoutchouc, indépendamment de tout aspect de recyclage.

Dans ce mode de réalisation de l'invention, le dispositif est tout à fait identique au dispositif 15 décrit précédemment. Le second matériau de doublage est amené de l'extérieur de la tête d'extrusion 3 entre le rouleau 7 et le dispositif 15. On peut également avantageusement prévoir la présence du dispositif de sécurité 23.

La tête d'extrusion 3 portant un tel dispositif, est également identique à celle décrite précédemment et peut, ou non, comporter des couteaux d'ébarbage. En présence de ces derniers, le recyclage des ébarbures obtenus peut, selon l'importance de ces dernières et la nature du matériau de doublage, être recyclées par doublage en mélangeage avec le matériau extérieur ou être réintroduites en entrée de l'extrudeuse.

## Revendications

1. Dispositif (15) destiné à être monté sur une tête d'extrusion (3) comportant un rouleau rotatif (7), le dispositif comprenant, successivement, un élément collecteur (16) d'un matériau, qui possède une surface extérieure (161) concave portant des nervures convergentes (162), un élément d'agglomération (17) dudit matériau en une masse cohérente, ledit élément d'agglomération (17) ayant une surface extérieure (171) concave de courbure plus marquée que celle de la surface extérieure (161) de l'élément collecteur (16), et un élément de laminage et de répartition (18) de cette masse constitué par une lame.

2. Dispositif selon la revendication 1, **caractérisé par le fait que** la surface extérieure (161) concave de l'élément collecteur (16) porte une nervure centrale divergente (163).

3. Dispositif selon l'une quelconque des revendications 1 ou 2, **caractérisé par le fait que** la surface extérieure (161) concave de l'élément collecteur (16) est sensiblement parallèle à la surface extérieure du rouleau (7) avec laquelle elle coopère, et faiblement espacée de cette dernière.

4. Dispositif selon l'une quelconque des revendications 1 à 3, **caractérisé par le fait que** l'élément d'agglomération (17) possède des bords latéraux opposés (172) limitant, transversalement par rapport au rouleau (7), l'étendue de la masse cohérente formée.

5. Dispositif selon l'une quelconque des revendications 1 à 4, **caractérisé par le fait que** la lame (18) délimite avec le rouleau (7) un orifice de passage (20).

6. Dispositif selon l'une quelconque des revendications 1 à 5, **caractérisé par le fait que** la lame (18) est insérée dans une ouverture (21) pratiquée dans l'élément d'agglomération (17) et qu'un organe de réglage (22) du positionnement de la lame (18), localisé dans ladite ouverture (21), assure un écartement sensiblement constant entre la lame (18) et le rouleau (7).

7. Tête d'extrusion (3) pour fabriquer un produit à base d'un mélange de caoutchouc, pourvue d'un passage d'entrée (41) dudit mélange de caoutchouc dans une chambre d'accumulation (4) débouchant sur un orifice d'extrusion (6) au travers duquel ledit mélange de caoutchouc est refoulé et qui comporte une paroi (8) coopérant avec un rouleau rotatif (7) pour définir le profil du produit, la tête d'extrusion (3) comprenant des couteaux d'ébarbage (10, 11) des bords du produit extrudé, situés immédiatement en aval de l'orifice d'extrusion (6), **caractérisée en ce qu'**elle comporte un dispositif (15) selon l'une quelconque des revendications 1 à 6 permettant le recyclage des ébarbures obtenues par leur réintroduction dans la chambre d'accumulation (4) directement entre le passage d'entrée (41) et l'orifice d'extrusion (6).

8. Tête d'extrusion selon la revendication 7, **caractérisée par le fait que** les ébarbures sont réintroduites sur le rouleau (7) en amont de la chambre d'accumulation (4).

9. Tête d'extrusion selon l'une quelconque des revendications 7 ou 8, **caractérisée par le fait que** le dispositif (15) est localisé en aval des couteaux d'ébarbages (10, 11), et en ce qu'il coopère avec le rouleau (7) afin d'entraîner les ébarbures jusqu'à l'orifice d'extrusion (6), le long dudit rouleau (7), dans le sens de rotation de ce dernier.

10. Tête d'extrusion selon l'une quelconque des revendications 7 à 9, **caractérisée par le fait que** le dispositif (15) répartit le mélange composé des ébarbures à la surface du rouleau (7) pour superposer par dessus le produit en provenance du passage d'entrée (41).

11. Tête d'extrusion selon l'une quelconque des revendications 7 à 10, **caractérisée par le fait qu'**elle comporte un dispositif de sécurité (23) équipé de petites roulettes (232) d'axe de rotation parallèle à celui du rouleau (7), facilitant l'entraînement des ébarbures vers le dispositif (15) permettant leur recyclage.

12. Extrudeuse pour fabriquer un produit à base d'un mélange de caoutchouc comportant une tête d'extrusion (3) pourvue d'un passage d'entrée (41) dudit mélange de caoutchouc dans une chambre d'accumulation (4) débouchant sur un orifice d'extrusion (6) au travers duquel le mélange de caoutchouc est refoulé et qui comporte une paroi (8) coopérant avec un rouleau rotatif (7) pour définir le profil du produit, des couteaux d'ébarbage (10, 11) des bords du produit extrudé étant situés immédiatement en aval de l'orifice d'extrusion (6), la tête d'extrusion (3) comprenant un dispositif (15) selon l'une quelconque des revendications 1 à 6 permettant de recycler les ébarbures obtenues par leur réintroduction dans la chambre d'accumulation (4).

13. Tête d'extrusion (3) pour fabriquer un produit à base d'un mélange de caoutchouc, pourvue d'un passage d'entrée (41) dudit mélange de caoutchouc dans une chambre d'accumulation (4) débouchant sur un orifice d'extrusion (6) au travers duquel ledit mélange de caoutchouc est refoulé et qui comporte une paroi (8) coopérant avec un rouleau rotatif (7) pour définir le profil du produit, **caractérisée en ce que** la tête d'extrusion (3) comprend un dispositif (15) selon l'une quelconque des revendications 1 à 6, dispositif qui permet d'introduire un matériau à base d'un mélange de caoutchouc dans la chambre d'accumulation (4) directement entre le passage d'entrée (41) et l'orifice d'extrusion (6) et de le répartir à la surface du rouleau (7) pour superposer par dessus le produit en provenance du passage d'entrée (41).

14. Tête d'extrusion selon la revendication 13, **caractérisée par le fait qu'**elle comporte, en amont du dispositif (15), un dispositif de sécurité (23) équipé de petites roulettes (232) d'axe de rotation parallèle à celui du rouleau (7), facilitant l'entraînement du matériau vers le dispositif (15) permettant la superposition.

## Claims

1. A device (15) intended to be mounted on an extrusion head (3) comprising a rotary roller (7), the device comprising, in succession, a collecting element (16) for a material, which has a concave outer surface (161) bearing converging ribs (162), an element (17) for agglomerating said material into a coherent mass, said agglomeration element (17) having a concave outer surface (171) of a more marked curvature than that of the outer surface (161) of the collecting element (16), and a lamination and distributing element (18) for this mass, formed by a blade.

2. A device according to Claim 1, **characterised by** the fact that the concave outer surface (161) of the collecting element (16) bears a diverging central rib (163).

3. A device according to any one of Claims 1 or 2, **characterised by** the fact that the concave outer surface (161) of the collecting element (16) is substantially parallel to the outer surface of the roller (7) with which it cooperates, and slightly spaced apart therefrom.

4. A device according to any one of Claims 1 to 3, **characterised by** the fact that the agglomeration element (17) has opposing lateral edges (172) limiting the extent of the coherent mass formed, transversely to the roller (7).

5. A device according to any one of Claims 1 to 4, **characterised by** the fact that the blade (18) defines a passage orifice (20) with the roller (7).

6. A device according to any one of Claims 1 to 5, **characterised by** the fact that the blade (18) is inserted into an opening (21) made in the agglomeration element (17) and that an adjusting element (22) for the positioning of the blade (18) located in said opening (21) ensures a substantially constant spacing between the blade (18) and the roller (7).

7. An extrusion head (3) for producing a product on the basis of a rubber mix, provided with an entry passage (41) for said rubber mix into an accumulation chamber (4) opening into an extrusion orifice (6) through which said rubber mix is delivered and which comprises a partition (8) cooperating with a rotary roller (7) to define the profile of the product, the extrusion head (3) comprising cutters (10, 11) for deburring the edges of the extruded product, located immediately downstream of the extrusion orifice (6), **characterised in that** it comprises a device (15) according to any one of Claims 1 to 6 for recycling for the burrs obtained by reintroducing them into the accumulation chamber (4) directly between the entry passage (41) and the extrusion orifice (6).

8. An extrusion head according to Claim 7, **characterised by** the fact that the burrs are reintroduced on the roller (7) upstream of the accumulation chamber (4).

9. An extrusion head according to any one of Claims 7 or 8, **characterised by** the fact that the device (15) is located downstream of the deburring cutters (10, 11), and in that it cooperates with the roller (7) in order to entrain the burrs as far as the extrusion orifice (6), along said roller (7), in the direction of rotation of the latter.

10. An extrusion head according to any one of Claims 7 to 9, **characterised by** the fact that the device (15) distributes the mix composed of the burrs on the surface of the roller (7) in order to superpose from above thereon the product coming from the entry passage (41).

11. An extrusion head according to any one of Claims 7 to 10, **characterised by** the fact that it comprises a safety device (23) equipped with small rollers (232) having an axis of rotation parallel to that of the roller (7), which facilitates the entraining of the burrs towards the device (15) which permits recycling thereof.

12. An extruder for producing a product on the basis of a rubber mix, comprising an extrusion head (3) provided with an entry passage (41) for said rubber mix into an accumulation chamber (4) opening into an extrusion orifice (6) through which the rubber mix is delivered and which comprises a partition (8) cooperating with a rotary roller (7) for defining the profile of the product, cutters (10, 11) for deburring the edges of the extruded product being located immediately downstream of the extrusion orifice (6), the extrusion head (3) comprising a device (15) according to any one of Claims 1 to 6 for recycling the burrs obtained by reintroducing them into the accumulation chamber (4).

13. An extrusion head (3) for producing a product on the basis of a rubber mix, provided with an entry passage (41) for said rubber mix into an accumulation chamber (4) opening into an extrusion orifice (6) through which said rubber mix is delivered and which comprises a partition (8) cooperating with a rotary roller (7) for defining the profile of the product,
**characterised in that** the extrusion head (3) comprises a device (15) according to any one of Claims 1 to 6, which device permits introducing a material on the basis of a rubber mix into the accumulation chamber (4) directly between the entry passage (41) and the extrusion orifice (6), and distributing it on the surface of the roller (7) in order to superpose the product coming from the entry passage (41) from on top.

14. An extrusion head according to Claim 13, **characterised by** the fact that it comprises, upstream of the device (15), a safety device (23) equipped with small rollers (232) having an axis of rotation parallel to that of the roller (7), which facilitates the entraining of the material towards said device (15) permitting superposition.

## Patentansprüche

1. Vorrichtung (15), die dazu bestimmt ist, auf einen Extrusionskopf (3) montiert zu werden, der eine drehbare Walze (7) aufweist, wobei die Vorrichtung nacheinander ein Element (16) zum Sammeln eines Materials, das eine konkave Außenfläche (161) mit konvergierenden Rippen (162) besitzt, ein Element (17) zum Verdichten des Materials zu einer zusammenhängenden Masse, wobei das Verdichtungselement (17) eine konkave Außenfläche (171) hat, deren Krümmung stärker ist als die der Außenfläche (161) des Sammelelements (16), und ein Element (18) zum Walzen und Verteilen dieser Masse aufweist, das aus einem Schild besteht.

2. Vorrichtung nach Anspruch 1, **dadurch gekennzeichnet, daß** die konkave Außenfläche (161) des Sammelelements (16) eine zentrale, divergierende Rippe (163) aufweist.

3. Vorrichtung nach einem der Ansprüche 1 oder 2, **dadurch gekennzeichnet, daß** die konkave Außenfläche (161) des Sammelelements (16) im wesentlichen parallel zur Außenfläche der Walze (7) ist, mit der sie zusammenwirkt, und in einem geringen Abstand zu dieser letzteren.

4. Vorrichtung nach einem der Ansprüche 1 bis 3, **dadurch gekennzeichnet, daß** das Verdichtungselement (17) gegenüberliegende Seitenränder (172) aufweist, die quer in bezug auf die Walze (7) die Ausdehnung der gebildeten zusammenhängenden Masse begrenzen.

5. Vorrichtung nach einem der Ansprüche 1 bis 4, **dadurch gekennzeichnet, daß** der Schild (18) mit der Walze (7) eine Durchlaßöffnung (20) begrenzt.

6. Vorrichtung nach einem der Ansprüche 1 bis 5, **dadurch gekennzeichnet, daß** der Schild (18) in eine Öffnung (21) eingeführt ist, die im Verdichtungselement (17) ausgebildet ist, und daß ein Einstellorgan (22) für die Positionierung des Schilds (18), das sich in dieser Öffnung (21) befindet, einen im wesentlichen konstanten Abstand zwischen dem Schild (18) und der Walze (7) gewährleistet.

7. Extrusionskopf (3) zur Herstellung eines Produkts auf der Basis einer Kautschukmischung, der mit einem Kanal (41) für den Einlaß der Kautschukmischung in eine Sammelkammer (4) versehen ist, die in eine Exbudieröflaung (6) einmündet, durch die hindurch die Kautschukmischung gedrückt wird und die eine Wand (8) aufweist, die mit einer drehbaren Walze (7) zusammenwirkt, um das Profil des Produkts zu definieren, wobei der Extrusionskopf (3) Entgratungsmesser (10, 11) für die Ränder des extrudierten Produkts aufweist, die sich direkt stromabwärts hinter der Extrudieröffnung (6) befinden, **dadurch gekennzeichnet, daß** er eine Vorrichtung (15) nach einem der Ansprüche 1 bis 6 aufweist, die es ermöglicht, die erhaltenen Entgratungsabfälle durch ihre Wiedereinführung in die Sammelkammer (4) direkt zwischen dem Einlaßkanal (41) und der Extrudieröffnung (6) wiederzuverwerten.

8. Extrusionskopf nach Anspruch 7, **dadurch gekennzeichnet, daß** die Entgratungsabfälle stromaufwärts vor der Sammelkammer (4) wieder auf die Walze (7) gebracht werden.

9. Extrusionskopf nach einem der Ansprüche 7 oder 8, **dadurch gekennzeichnet, daß** die Vorrichtung (15) stromabwärts hinter den Entgratungsmessern (10, 11) angeordnet ist und daß sie mit der Walze (7) zusammenwirkt, um die Entgratungsabfälle entlang der Walze (7) gemäß deren Drehrichtung bis zur Extrudieröffnung (6) anzutreiben.

10. Extrusionskopf nach einem der Ansprüche 7 bis 9, **dadurch gekennzeichnet, daß** die Vorrichtung (15) die aus den Entgratungsabfällen bestehende Mischung an der Oberfläche der Walze (7) verteilt, um darüber das vom Einlaßkanal (41) kommende Material aufzubringen.

11. Extrusionskopf nach einem der Ansprüche 7 bis 10, **dadurch gekennzeichnet, daß** er eine Sicherheitsvorrichtung (23) aufweist, die mit kleinen Röllchen (232) einer Drehachse parallel zur derjenigen der Walze (7) ausgestattet ist, die den Antrieb der Entgratungsabfälle zur Vorrichtung (15) erleichtern, die ihre Wiederverwertung ermöglicht.

12. Extruder zur Herstellung eines Produkts auf der Basis einer Kautschukmischung, der einen Extrusionskopf (3) aufweist, der mit einem Kanal (41) für den Einlaß *der* Kautschukmischung in eine Sammelkammer (4) versehen ist, die in eine Extrudieröffnung (6) einmündet, durch die hindurch die Kautschukmischung gedrückt wird und die eine Wand (8) aufweist, die mit einer drehbaren Walze (7) zusammenwirkt, um das Profil des Produkts zu definieren, wobei Entgratungsmesser (10, 11) für die Ränder des extrudierten Produkts sich direkt stromabwärts hinter der Extrudieröffnung (6) befinden, wobei der Extrusionskopf (3) eine Vorrichtung (15) nach einem der Ansprüche 1 bis 6 aufweist, die die Wiederverwertung der erhaltenen Entgratungsabfälle durch ihre Wiedereinführung in die Sammelkammer (4) ermöglicht.

13. Extrusionskopf (3) zur Herstellung eines Produkts auf der Basis einer Kautschukmischung, der mit einem Kanal (41) für den Einlaß der Kautschukmischung in eine Sammelkammer (4) versehen ist, die in eine Extrudieröffnung (6) einmündet, durch die hindurch die Kautschukmischung gedrückt wird und die eine Wand (8) aufweist, die mit einer drehbaren Walze (7) zusammenwirkt, um das Profil des Produkts zu definieren, **dadurch gekennzeichnet, daß** der Extrusionskopf (3) eine Vorrichtung (15) nach einem der Ansprüche 1 bis 6 aufweist, Vorrichtung, die es ermöglicht, ein Material auf der Basis einer Kautschukmischung direkt zwischen dem Einlaßkanal (41) und der Extrudieröffnung (6) in die Sammelkammer (4) einzuführen und es an der Oberfläche der Walze (7) zu verteilen, um das vom Einlaßkanal (41) kommende Material darüber zu schichten.

14. Extrusionskopf nach Anspruch 13, **dadurch gekennzeichnet, daß** er stromaufwärts vor der Vorrichtung (15) eine Sicherheitsvorrichtung (23) aufweist, die mit kleinen Röllchen (232) einer Drehachse parallel zu derjenigen der Walze (7) ausgestattet ist, die den Antrieb des Materials zur Vorrichtung (15) erleichtern, die die Überlagerung ermöglicht.
